# FASCICULE DE BREVET EUROPEEN

(11) **EP 3 070 367 B1**
(45) Date de publication et mention de la délivrance du brevet: **19.06.2019**
(21) Numéro de dépôt: 16158843.9
(22) Date de dépôt: 04.03.2016
(51) Int. Cl.: F16F 15/14

(54) **DISPOSITIF D AMORTISSEMENT D OSCILLATIONS DE TORSION**
VORRICHTUNG ZUR TORSIONSSCHWINGUNGSDÄMPFUNG
DEVICE FOR DAMPING TORSIONAL VIBRATIONS

(30) Priorité: 20.03.2015 FR 1552327
(43) Date de publication de la demande: 21.09.2016
(73) Titulaire: Valeo Embrayages, 80009 Amiens Cedex 2 (FR)
(72) Inventeur: VERHOOG, Roel, 60190 GOURNAY SUR ARONDE (FR)
(74) Mandataire: Cardon, Nicolas

(56) Documents cités:
- DE-A1-102011 013 232
- FR-A1- 2 989 753
- FR-A1- 3 000 156

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

La demande WO 2011/110168 divulgue un tel dispositif. Selon ce dispositif, les organes de roulement sont reçus dans des fenêtres du support qui sont différentes des fenêtres du support dans lesquelles sont reçus les organes de liaison. Afin d'assurer une bonne tenue mécanique entre elles des masses pendulaires d'un même corps pendulaire, il est souhaitable de prévoir plusieurs organes de liaison distincts, par exemple trois. Dans le cas où le dispositif pendulaire est de type bifilaire, deux organes de roulement distincts sont associés à un même corps pendulaire. En conséquence, un nombre élevé de fenêtres doit être ménagé dans le support, chaque fenêtre étant uniquement dédiée à un organe de roulement ou à un organe de liaison. Selon WO 2011/110168, cinq fenêtres doivent être ménagées dans le support pour chaque corps pendulaire.

Du fait du nombre important de fenêtres ménagées dans le support, la fabrication de ce dernier est complexe et sa tenue mécanique est dégradée. D'autres dispositifs d'amortissement de torsion avec corps pendualires sont connus avec les documents FR3000156A1 et FR 2989 753.

Il existe un besoin pour remédier à tout ou partie des inconvénients précités.

Un premier aspect de l'invention a pour but de répondre à ce besoin et y parvient à l'aide d'un dispositif d'amortissement d'oscillations de torsion, comprenant :
- un support apte à se déplacer en rotation autour d'un axe,
- au moins un corps pendulaire comprenant : une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses, et
- au moins un organe de roulement coopérant avec une première piste de roulement solidaire de la première masse pendulaire, une deuxième piste de roulement solidaire de la deuxième masse pendulaire, et une troisième piste de roulement solidaire du support, de manière à guider le déplacement du corps pendulaire par rapport au support,
le support présentant au moins une fenêtre dans laquelle l'organe de liaison et l'organe de roulement sont disposés.

Un tel dispositif d'amortissement d'oscillations de torsion présente une fenêtre commune à un organe de liaison et à un organe de roulement, contrairement à ce qui est divulgué dans l'art antérieur ci-dessus.

Les fenêtres du support sont mutualisées, leur nombre est donc réduit, ce qui permet de remédier au problème de complexité de fabrication et/ou de tenue mécanique mentionnés ci-dessus.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « solidaire » signifie « rigidement couplé », et
- la position de repos du corps pendulaire est la position dans laquelle le corps pendulaire est soumis à une force centrifuge mais non à des acyclismes.
Autrement dit, la position de repos du dispositif est observée lorsque le support ne présente aucune accélération angulaire.

Au sens de la demande, une fenêtre est un évidement à contour fermé et continu ménagé dans le support. La fenêtre définit un espace vide à l'intérieur du support.

Dans la fenêtre, peuvent être disposés uniquement l'organe de liaison et l'organe de roulement.

Dans un plan orthogonal à l'axe de rotation du support, l'organe de liaison peut présenter une section sensiblement circulaire. L'organe de liaison est par exemple un rivet. En variante l'organe de liaison peut, dans un tel plan, être de forme quelconque, cette forme étant définie de façon à maximiser la masse du corps pendulaire sans toutefois entraver la coopération entre la troisième piste de roulement et l'organe de roulement lors de toute phase de fonctionnement du dispositif.

L'organe de roulement et l'organe de liaison peuvent être radialement alignés lorsque le dispositif est en position de repos.

L'organe de liaison peut alors être disposé radialement intérieurement par rapport à l'organe de roulement.

Qu'ils soient ou non radialement alignés dans la position de repos, l'organe de liaison peut en permanence être disposé à une distance de l'axe de rotation du support inférieure à celle à laquelle est disposé l'organe de roulement.

La fenêtre peut présenter un bord radialement extérieur, dont une partie définit la troisième piste de roulement, deux bords latéraux et un bord radialement intérieur. Chacun de ces bords peut être défini par une même pièce.

Le bord radialement extérieur peut décrire une forme incurvée, étant par exemple concave.

Dans une variante, la troisième piste de roulement n'est pas définie par une partie du bord radialement extérieur de la fenêtre mais par un revêtement déposé sur ce bord radialement extérieur.

Les deux bords latéraux peuvent être de direction sensiblement divergente lorsque l'on se rapproche de l'axe de rotation du support. Ces deux bords latéraux peuvent être sensiblement rectilignes.

Le bord radialement intérieur peut s'étendre dans une direction sensiblement circonférentielle tout en étant rectiligne.

Les coins de la fenêtre, définis par la rencontre des bords successifs, peuvent être émoussés.

L'organe de liaison peut venir en butée contre l'un des bords latéraux de la fenêtre à l'issue d'un déplacement depuis la position de repos du corps pendulaire par rapport au support.

Ce déplacement est effectué lorsque des oscillations de torsion se propagent dans la chaîne de propulsion du véhicule, et ce déplacement du corps pendulaire permet la filtration de ces oscillations de torsion par le dispositif.

L'organe de liaison peut venir en butée sur l'un des bords latéraux lors d'un déplacement dans le sens horaire depuis la position de repos du corps pendulaire et sur l'autre des bords latéraux lors d'un déplacement dans le sens anti-horaire depuis la position de repos.

La venue en butée de l'organe de liaison contre les bords latéraux peut permettre de définir un débattement du corps pendulaire par rapport au support.

En variante, L'organe de liaison peut venir en butée à la fois contre l'un des bords latéraux et contre le bord radialement intérieur de la fenêtre à l'issue du déplacement depuis la position de repos. Autrement dit, l'organe de liaison peut venir en butée contre un des coins défini par un bord latéral et le bord radialement intérieur.

L'organe de liaison peut également venir en butée contre le bord radialement intérieur de la fenêtre, par exemple lors d'un arrêt du moteur du véhicule ou en cas de faible vitesse de ce dernier. Le bord radialement intérieur de la fenêtre empêche alors la chute radiale du corps pendulaire, et ainsi les bruits et/ou usures en résultant.

En variante, cette fonction d'évitement de chute radiale du corps pendulaire est réalisée autrement que via une venue en butée de l'organe de liaison.

Selon l'invention , l' organe de liaison porte un organe d'amortissement de butée apte à s'interposer entre cet organe de liaison et le bord de la fenêtre à l'issue du déplacement depuis la position de repos du corps pendulaire par rapport au support.

Cet organe d'amortissement de butée peut également s'interposer entre l'organe de liaison et le bord radialement intérieur de la fenêtre lors de la venue en butée de l'organe de liaison contre ce bord, tel que mentionné ci-dessus.

L'organe d'amortissement de butée peut présenter des propriétés élastiques permettant l'amortissement des chocs liés au contact entre le support et le corps pendulaire. Cet amortissement est alors permis par une compression de l'organe d'amortissement de butée.

L'organe d'amortissement de butée est par exemple en élastomère ou en caoutchouc.

L'organe de liaison peut être de forme torique, entourant l'organe de liaison ou uniquement sa partie centrale, qui est sa partie disposée dans la fenêtre.

En variante, l'organe d'amortissement de butée peut avoir une autre forme, ne s'étendant par exemple pas tout autour de l'organe de liaison.

Dans tout ce qui précède, l'organe de liaison peut être reçu dans une cavité de la première masse pendulaire distincte d'une cavité de cette première masse pendulaire coopérant avec l'organe de roulement et dont une partie du bord définit la première piste de roulement, et l'organe de liaison peut être reçu dans une cavité de la deuxième masse pendulaire distincte d'une cavité de cette deuxième masse pendulaire coopérant avec l'organe de roulement et dont une partie du bord définit la deuxième piste de roulement.

Les cavités des masses pendulaires coopérant avec l'organe de roulement peuvent être identiques notamment en forme de haricot orientée vers l'extérieur.

Les parties des bords de ces cavités définissant la première et la deuxième piste de roulement peuvent être des parties du bord radialement intérieur aux cavités. Ces parties ont par exemple une forme concave.

Les cavités des masses pendulaires coopérant avec l'organe de roulement peuvent être radialement plus éloignées de l'axe X que les cavités des masses pendulaires coopérant avec l'organe de liaison.

L'organe de liaison peut permettre, en plus d'apparier les première et deuxième masses pendulaires, de maintenir les masses pendulaires à un écartement axial imposé. Cependant cet écartement axial est susceptible de varier du fait de la non-planéité de la matière dont sont issues les masses pendulaires, cette variation de l'écartement axial pouvant entrainer des contacts non linéaires entre l'organe de liaison et les pistes de roulement. En effet, l'organe de roulement étant réalisé pour fonctionner selon un écartement défini par l'organe de liaison, une variation de l'écartement axial entre les masses pendulaires au niveau des cavités coopérant avec l'organe de roulement peut entrainer des problèmes de coopération entre ledit organe de roulement et les pistes de roulement du support et des masses, notamment des contacts non linéaire indésirables susceptibles de provoquer une usure des pistes de roulement et/ou de l'organe de roulement.

Dans chaque masse pendulaire, les positions relatives des cavités coopérant respectivement avec l'organe de liaison et l'organe de roulement peuvent être à une distance l'une de l'autre, notamment à une distance radiale, comprise entre 0,6*épaisseur-tôle et 3*épaisseur-tôle, de préférence égale à 1*épaisseur-tôle, une épaisseur-tôle pouvant être la dimension axiale de la tôle dont est issue une masse pendulaire. L'écartement axial étant imposée par l'organe de liaison, la proximité, dans chaque masse, entre les cavités coopérant avec l'organe de liaison et les cavités coopérant avec l'organe de roulement permet de conserver un écartement axial sensiblement égal entre les masses au niveau de chacune des cavités en regard. Une telle proximité des cavités permet donc de répondre aux problèmes de contacts non linéaires entre l'organe de liaison et les pistes de roulement.

L'organe de roulement peut comprendre successivement axialement :
- une portion coopérant avec la première piste de roulement,
- une portion coopérant avec la troisième piste de roulement, et
- une portion coopérant avec la deuxième piste de roulement.

L'organe de roulement est par exemple un rouleau de section circulaire dans ledit plan orthogonal à l'axe de rotation du support. Le rouleau est par exemple réalisé en acier. Le rouleau peut être plein ou creux.

En variante, les portions coopérant avec les première et deuxième pistes de roulement peuvent être de rayon plus faible que celui de la portion coopérant avec la troisième piste de roulement.

Chacune des première et deuxième pistes de roulement peut être radialement en deçà de la portion de l'organe de roulement avec lesquelles elle coopère. À l'inverse, la troisième piste de roulement peut être radialement au delà de la portion de l'organe de roulement avec laquelle elle coopère. La troisième piste de roulement étant par ailleurs encadrée axialement par les première et deuxième pistes de roulement, lorsque les masses pendulaires sont soumises à un effet centrifuge du à la rotation du support, l'organe de roulement est soumis à un effort radialement extérieur via la troisième piste de roulement et il est soumis à effort radialement intérieur via les première et deuxième pistes de roulement. Autrement dit, l'organe de roulement est sollicité en flexion.

L'organe de roulement peut comprendre au moins une portion en saillie permettant un maintien axial de cet organe de roulement.

Cette portion en saillie peut prendre la forme d'une collerette disposée axialement entre l'une des masses pendulaires et le support, ou à l'extérieur d'une des masses pendulaires.

Chaque portion en saillie formée sur l'organe de roulement peut être disposée de manière à être reçue entre une masse pendulaire et le support. Ces portions permettent ainsi de limiter les frottements entre les masses pendulaires et le support, en maintenant un espace axial entre masses pendulaires et support.

En variante, ces portions en saillie, notamment ces collerettes, peuvent être disposées aux extrémités axiales de l'organe de roulement. Ces portions en saillie confèrent alors à l'organe de roulement un caractère imperdable.

Afin d'éviter les chocs axiaux entre les masses pendulaires et le support, des pièces d'interposition, encore appelées « patins », peuvent être disposées entre ces éléments.

L'organe de roulement peut être disposé de façon à ce que les portions en saillie soient constamment en regard du support dans la direction axiale.

En combinaison de tout ce qui a été dit précédemment, le dispositif peut comprendre une pluralité de corps pendulaires qui comprennent au moins deux organes de liaison et au moins deux organes de roulement. Le support peut alors comprendre au moins deux fenêtres, chaque fenêtre pouvant recevoir un des organes de liaison et un des organes de roulement.

Selon l'invention, le nombre total de fenêtres ménagées dans le support du dispositif d'amortissement d'oscillations de torsion pour solidariser entre elles les masses pendulaires des corps pendulaires et pour guider le déplacement de ces corps pendulaires peut ainsi être égal au nombre total d'organes de roulement du dispositif.

Le support peut être formé d'un seul tenant dans lequel est ménagé au moins une fenêtre.

L'organe de liaison peut venir en butée contre la fenêtre pour limiter le déplacement du corps pendulaire, notamment dans la direction circonférentielle. L'organe de liaison a alors une fonction de butée en plus de sa fonction de liaison des masses pendulaires. La fenêtre permet le guidage du corps pendulaire et l'arrêt de son déplacement dans la direction circonférentielle. Une telle fenêtre permet de se dispenser d'adapter le support (à l'exception de la fenêtre) pour l'arrêt du corps pendulaire, ce qui simplifie sa fabrication.

Le dispositif peut comprendre entre 2 et 8 corps pendulaires, de préférence 6.

Chaque corps pendulaire peut comprendre entre 1 et 4 organes de liaison, de préférence 2, et entre 1 et 4 organes de roulement, de préférence 2.

Le support peut comprendre pour chaque corps pendulaire entre 1 et 4 fenêtres, de préférence 2.

Tous ces corps pendulaires peuvent se succéder circonférentiellement. Le dispositif peut ainsi comprendre une pluralité de plans orthogonaux à l'axe de rotation dans chacun desquels tous les corps pendulaires sont disposés.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Dans tout ce qui précède, le support peut ou non être réalisé d'une seule pièce.

L'invention a encore pour objet, selon un autre de ses aspects, un composant pour système de transmission d'un véhicule automobile, le composant étant notamment un double volant amortisseur, un convertisseur de couple hydrodynamique ou un disque de friction, comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'exemples non limitatifs de mise en oeuvre de celle-ci, et à l'examen du dessin annexé sur lequel :
- la figure 1 représente de façon schématique et partielle un dispositif d'amortissement d'oscillations de torsion dans une première position,
- la figure 2 représente un détail du dispositif d'amortissement de la figure 1 dans une deuxième position et
- la figure 3 représente un détail du dispositif d'amortissement de la figure 1 dans une position de repos.

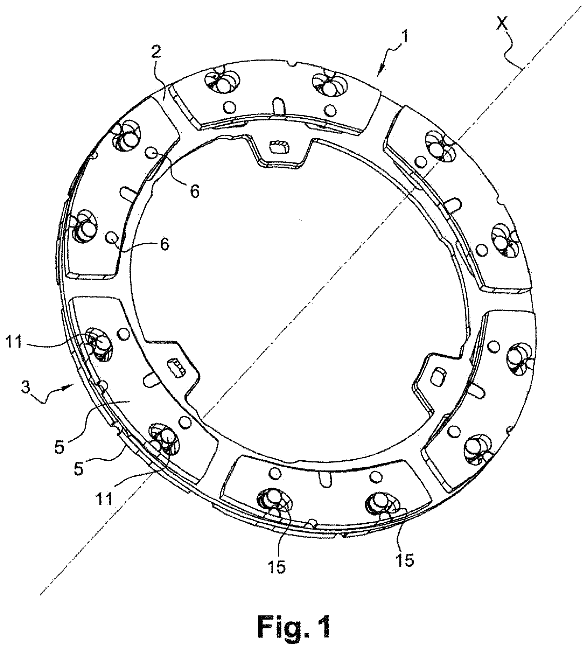

On a représenté sur la figure 1 un dispositif d'amortissement 1 d'oscillations de torsion de type oscillateur pendulaire apte à équiper un système de transmission de véhicule automobile comprenant un moteur thermique notamment à trois ou quatre cylindres.

Le dispositif 1 est par exemple intégré à un composant non représenté d'un tel système de transmission tel qu'un double volant amortisseur, un convertisseur de couple hydrodynamique ou un disque de friction.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Sur la figure 1, le dispositif 1 est au repos, le dispositif 1 est soumis à une force centrifuge mais non à des acyclismes.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, six corps pendulaires 3 sont prévus et se succèdent circonférentiellement de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment un voile, une rondelle de guidage ou une rondelle de phasage.

Dans l'exemple considéré, le support 2 présente globalement une forme d'anneau comportant deux côtés opposés 4 qui sont ici des faces planes.

Dans l'exemple considéré, chaque corps pendulaire 3 comprend :
- une première et une deuxième masses pendulaires 5, chaque masse pendulaire 5 s'étendant axialement en regard d'un côté 4 du support 2, et
- deux organes de liaison 6 appariant les deux masses pendulaires 5.

Les organes de liaison 6, encore appelés « entretoises », sont, dans l'exemple considéré, décalés angulairement.

Chaque organe de liaison 6 est disposé en partie dans une fenêtre 9 du support 2. Comme on le verra par la suite, chaque organe de liaison 6 coopère avec chaque masse pendulaire 5 en étant reçu et solidarisé dans une cavité 7 des dites masses pendulaires 5.

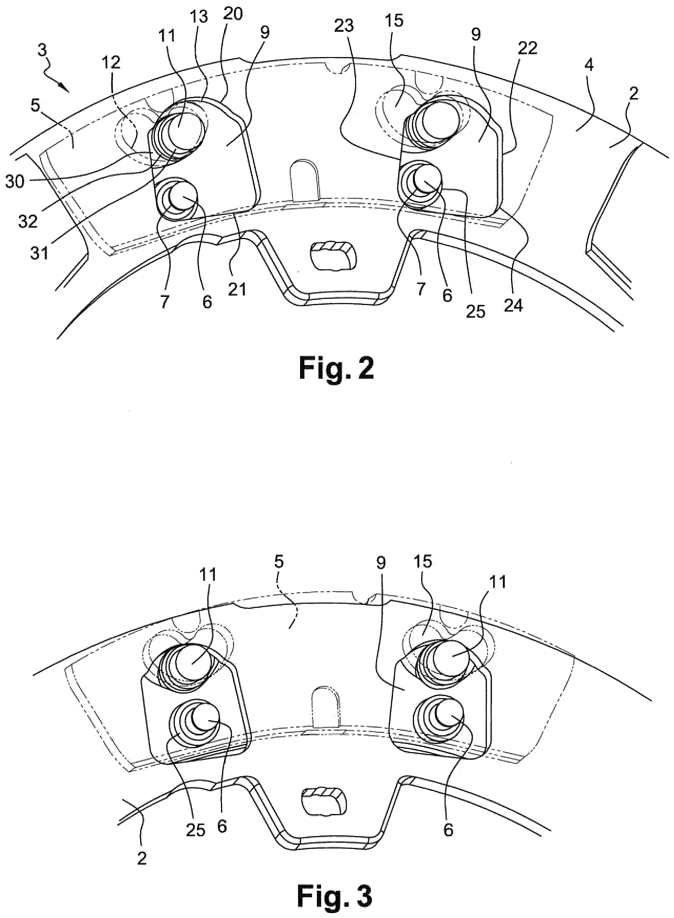

Comme représenté aux figures 2 et 3, chaque fenêtre 9 définit un espace libre à l'intérieur du support 2 et présente un bord radialement extérieur 20, de forme concave, un bord radialement intérieur 21 rectiligne, de direction sensiblement circonférentielle, et deux bords latéraux 22 et 23.

Les deux bords latéraux 22 et 23 sont de direction sensiblement divergente lorsque l'on se rapproche de l'axe X. Les coins 24 de chaque fenêtre 9, définis par la rencontre d'un des bords latéraux 22 et 23 et le bord radialement extérieur, sont émoussés.

Dans l'exemple considéré, le déplacement, par rapport au support 2, de chaque corps pendulaire 3 est guidé par deux organes de roulement 11. Chaque organe de roulement 11 est également disposé dans une des fenêtres 9 si bien que chaque fenêtre 9 reçoit un organe de liaison 6 et un organe de roulement 11.

Dans la suite, seul un organe de roulement 11 et un organe de liaison 6 seront décrits, les autres étant identiques.

Comme cela est représenté à la figure 3, l'organe de roulement 11 et l'organe de liaison 6 sont radialement alignés lorsque le dispositif 1 est en position de repos.

Lors de toute phase de fonctionnement du dispositif 1, l'organe de liaison 6 est en permanence disposé à une distance de l'axe X inférieure à celle à laquelle est disposé l'organe de roulement 11 comme cela est bien visible aux figures 2 et 3.

Dans l'exemple considéré, l'organe de roulement 11 comprend une portion 30 coopérant avec une première piste de roulement 12 solidaire de la première masse pendulaire 5, une portion 31 coopérant avec une deuxième piste de roulement 12 solidaire de la deuxième masse pendulaire 5, et une portion 32 coopérant avec une troisième piste de roulement 13 solidaire du support 2.

Les portions 30, 32 et 31 se succèdent axialement dans cet ordre.

Une partie du bord radialement extérieur 20 de la fenêtre 9 définit la troisième piste de roulement 13 tandis que des parties des première et deuxième pistes de roulement 12, de forme concave, sont définies par des parties des cavités 15 appartenant aux première et deuxième masses pendulaires 5. Ces cavités 15 sont identiques et en forme de haricot orienté vers l'extérieur.

Les pistes de roulement 12 sont radialement en deçà de la portion 30, 31 de l'organe de roulement 11 avec lesquelles elles coopèrent. À l'inverse, la troisième piste de roulement 13 est radialement au delà de la portion 32 de l'organe de roulement 11 avec laquelle elle coopère. La troisième piste de roulement 13 est par ailleurs encadrée axialement par les première et deuxième pistes de roulement 12.

Chacune des portions 30, 31, 32 de l'organe de roulement 11, dans un plan orthogonal à l'axe X, présente une section cylindrique, les portions 30 et 31 étant de rayon plus faible que la portion 32.

L'organe de roulement 11, dans l'exemple considéré, comprend deux portions en saillie en forme de collerette disposées entre les portions 30 et 32 et entre les portions 31 et 32, ces collerettes sont reçues entre le support 2 et les masses pendulaires 5.

L'organe de liaison 6, dans un plan orthogonal à l'axe X, présente une section circulaire et porte un organe d'amortissement de butée 25 de forme torique, cet organe d'amortissement de butée étant déposée tout autour de la partie de l'organe de liaison 6 qui est disposée dans la fenêtre 9.

Comme représenté à la figure 2, l'organe d'amortissement de butée de butée 25 s'interpose entre le bord latéral 22 de la fenêtre 9 et l'organe de liaison 6 lorsque celui-ci vient en butée à l'issu d'un déplacement depuis sa position de repos, ce déplacement permettant de filtrer des oscillations de torsion.

De façon plus précise et comme représenté à la figure 2, l'organe de liaison 6 peut venir en butée non seulement contre le bord latéral 22 mais aussi contre le bord radialement intérieur 21 au niveau du coin 24 défini par ces deux bords.

Dans des positions non représentées, l'organe d'amortissement 25 peut aussi venir s'interposer entre l'organe de liaison 6 et le bord radialement intérieur 22 lorsque le dispositif 1 est, par exemple, à l'arrêt et afin de limiter une chute radial du corps pendulaire 3.

Bien que non représenté, le dispositif 1 peut encore comprendre des pièces d'interposition disposées axialement entre chaque masse pendulaire 5 et le support 2, chaque pièce d'interposition étant par exemple rapportée sur un des masses pendulaires 5.

Comme déjà mentionné, l'organe de liaison 6 est reçu dans une cavité 7 d'une des deux masses pendulaire 5. L'organe de liaison 6 y est par exemple riveté ou emmanché à force si bien que les extrémités axiales de l'organe de liaison 6 sont ainsi maintenues dans les cavités 7 des deux masses pendulaires 5.

Les cavités 15 des masses pendulaires 5 sont radialement plus éloignées de l'axe X que les cavités 7 de chacune des deux masses pendulaires 5.

On va maintenant décrire le fonctionnement du dispositif 1 lors d'une phase de fonctionnement.

Les corps pendulaires 3, guidés par les organes de roulement 11, se déplacent par rapport au support 2 depuis leurs positions de repos présentées à la figure 1 lorsque des oscillations de torsion se propagent dans la chaîne de propulsion du véhicule. Ces déplacements des corps pendulaires 3 permettent la filtration des oscillations de torsion.

Lorsque les oscillations de torsion dépassent un certain seuil, les organes de liaison 6 viennent en butée contre les bords latéraux 22 des fenêtres 9 dans lesquelles ceux-ci sont disposés.

L'invention n'est pas limitée à l'exemple qui vient d'être décrit.

## Revendications

1. Dispositif (1) d'amortissement d'oscillations de torsion, comprenant :
- un support (2) apte à se déplacer en rotation autour d'un axe (X),
- au moins un corps pendulaire (3) comprenant : une première et une deuxième masses pendulaires (5) espacées axialement l'une par rapport à l'autre et mobiles par rapport au support (2), la première masse pendulaire (5) étant disposée axialement d'un premier côté du support (2) et la deuxième masse pendulaire (5) étant disposée axialement d'un deuxième côté du support (2), et au moins un organe de liaison (6) de la première et de la deuxième masses pendulaires (5) appariant lesdites masses, et
- au moins un organe de roulement (11) coopérant avec une première piste de roulement (12) solidaire de la première masse pendulaire (5), une deuxième piste de roulement solidaire (12) de la deuxième masse pendulaire (5), et une troisième piste de roulement (13) solidaire du support (2), de manière à guider le déplacement du corps pendulaire (3) par rapport au support (2),
le support (2) présentant au moins une fenêtre (9) dans laquelle l'organe de liaison (6) et l'organe de roulement (11) sont disposés, et
**caractérisé en ce que** l'organe de liaison porte un organe d'amortissement de butée (25) apte à s'interposer entre cet organe de liaison (6) et le bord de la fenêtre (9) à l'issue du déplacement depuis la position de repos du corps pendulaire (3) par rapport au support (2).

2. Dispositif (1) selon la revendication 1, l'organe de roulement (11) et l'organe de liaison (6) étant radialement alignés lorsque le dispositif (1) est au repos.

3. Dispositif selon la revendication 1 ou 2, la fenêtre (9) présentant un bord radialement extérieur (20) dont une partie définit la troisième piste de roulement, deux bord latéraux et un bord radialement intérieur.

4. Dispositif (1) selon la revendication 3, l'organe de liaison (6) venant en butée contre l'un des bords latéraux (23, 24) de la fenêtre à l'issue d'un déplacement depuis la position de repos du corps pendulaire (3) par rapport au support (2).

5. Dispositif (1) selon la revendication 4, l'organe d'amortissement de butée (25) étant apte à s'interposer entre cet organe de liaison (6) et le bord latéral de la fenêtre (23, 24) à l'issue du déplacement depuis la position de repos du corps pendulaire (3) par rapport au support (2).

6. Dispositif (1) selon la revendication 5, l'organe d'amortissement de butée (25) ayant une forme torique.

7. Dispositif (1) selon l'une quelconque des revendications précédentes, l'organe de liaison (6) étant reçu dans une cavité (7) de la première masse pendulaire (5) distincte d'une cavité (15) de cette première masse pendulaire (5) coopérant avec l'organe de roulement (11) et dont une partie du bord définit la première piste de roulement (12), et l'organe de liaison étant reçu dans une cavité (7) de la deuxième masse pendulaire (5) distincte d'une cavité (15) de cette deuxième masse pendulaire (5) coopérant avec l'organe de roulement (11) et dont une partie du bord définit la deuxième piste de roulement (12).

8. Dispositif (1) selon l'une des quelconque des revendications précédentes, l'organe de roulement (11) comprenant successivement axialement :
- une portion (30) coopérant avec la première piste de roulement (12),
- une portion (32) coopérant avec la troisième piste de roulement (13), et
- une portion (31) coopérant avec la deuxième piste de roulement (12).

9. Dispositif (1) selon l'une quelconque des revendications précédentes, l'organe de roulement (11) comprenant au moins une portion en saillie permettant un maintien axial de cet organe de roulement (11).

10. Dispositif (1) selon l'une quelconque des revendications précédentes, chaque corps pendulaire (3) comprenant au moins deux organes de liaison (6) et au moins deux organes de roulement (11), et le support comprenant au moins deux fenêtres (9), chaque fenêtre (9) recevant un des organes de liaison (6) et un des organes de roulement (11).

## Patentansprüche

1. Vorrichtung (1) zur Dämpfung von Torsionsschwingungen, welche umfasst:
- einen Träger (2), der in der Lage ist, sich um eine Achse (X) drehend zu bewegen,
- wenigstens einen Pendelkörper (3), welcher umfasst: eine erste und eine zweite Pendelmasse (5), die axial voneinander beabstandet und beweglich bezüglich des Trägers (2) sind, wobei die erste Pendelmasse (5) axial auf einer ersten Seite des Trägers (2) angeordnet ist und die zweite Pendelmasse (5) axial auf einer zweiten Seite des Trägers (2) angeordnet ist, und wenigstens ein Organ zur Verbindung (6) der ersten und der zweiten Pendelmasse (5), das diese Massen zu einem Paar vereinigt, und
- wenigstens ein Wälzelement (11), das mit einer ersten Laufbahn (12), die mit der ersten Pendelmasse (5) fest verbunden ist, einer zweiten Laufbahn (12), die mit der zweiten Pendelmasse (5) fest verbunden ist, und einer dritten Laufbahn (13), die mit dem Träger (2) fest verbunden ist, zusammenwirkt, um so die Bewegung des Pendelkörpers (3) bezüglich des Trägers (2) zu führen,
wobei der Träger (2) wenigstens ein Fenster (9) aufweist, in welchem das Verbindungsorgan (6) und das Wälzelement (11) angeordnet sind, und
**dadurch gekennzeichnet, dass** das Verbindungsorgan ein Anschlagdämpfungsorgan (25) trägt, das in der Lage ist, am Ende der Bewegung des Pendelkörpers (3) bezüglich des Trägers (2) aus der Ruheposition zwischen dieses Verbindungsorgan (6) und den Rand des Fensters (9) zu gelangen.

2. Vorrichtung (1) nach Anspruch 1, wobei das Wälzelement (11) und das Verbindungsorgan (6) radial zueinander ausgerichtet sind, wenn sich die Vorrichtung (1) im Ruhezustand befindet.

3. Vorrichtung nach Anspruch 1 oder 2, wobei das Fenster (9) einen radial äußeren Rand (20), von dem ein Teil die dritte Laufbahn definiert, zwei seitliche Ränder und einen radial inneren Rand aufweist.

4. Vorrichtung (1) nach Anspruch 3, wobei das Verbindungsorgan (6) am Ende einer Bewegung des Pendelkörpers (3) bezüglich des Trägers (2) aus der Ruheposition in Anschlag an einen der seitlichen Ränder (23, 24) des Fensters gelangt.

5. Vorrichtung (1) nach Anspruch 4, wobei das Anschlagdämpfungsorgan (25) in der Lage ist, am Ende der Bewegung des Pendelkörpers (3) bezüglich des Trägers (2) aus der Ruheposition zwischen dieses Verbindungsorgan (6) und den seitlichen Rand (23, 24) des Fensters zu gelangen.

6. Vorrichtung (1) nach Anspruch 5, wobei das Anschlagdämpfungsorgan (25) eine torusförmige Gestalt hat.

7. Vorrichtung (1) nach einem der vorhergehenden Ansprüche, wobei das Verbindungsorgan (6) in einem Hohlraum (7) der ersten Pendelmasse (5) aufgenommen ist, der verschieden von einem Hohlraum (15) dieser ersten Pendelmasse (5) ist, der mit dem Wälzelement (11) zusammenwirkt und von dem ein Teil des Randes die erste Laufbahn (12) definiert, und wobei das Verbindungsorgan in einem Hohlraum (7) der zweiten Pendelmasse (5) aufgenommen ist, der verschieden von einem Hohlraum (15) dieser zweiten Pendelmasse (5) ist, der mit dem Wälzelement (11) zusammenwirkt und von dem ein Teil des Randes die zweite Laufbahn (12) definiert.

8. Vorrichtung (1) nach einem der vorhergehenden Ansprüche, wobei das Wälzelement (11) axial nacheinander umfasst:
- einen Abschnitt (30), der mit der ersten Laufbahn (12) zusammenwirkt;
- einen Abschnitt (32), der mit der dritten Laufbahn (13) zusammenwirkt, und
- einen Abschnitt (31), der mit der zweiten Laufbahn (12) zusammenwirkt.

9. Vorrichtung (1) nach einem der vorhergehenden Ansprüche, wobei das Wälzelement (11) wenigstens einen vorstehenden Abschnitt umfasst, der einen axialen Halt dieses Wälzelements (11) ermöglicht.

10. Vorrichtung (1) nach einem der vorhergehenden Ansprüche, wobei jeder Pendelkörper (3) wenigstens zwei Verbindungsorgane (6) und wenigstens zwei Wälzelemente (11) umfasst und der Träger wenigstens zwei Fenster (9) umfasst, wobei jedes Fenster (9) eines der Verbindungsorgane (6) und eines der Wälzelemente (11) aufnimmt.

## Claims

1. Device (1) for damping torsional oscillations, comprising:
- a support (2) able to move rotationally about an axis (X),
- at least one pendulum assembly (3) comprising: a first and a second pendulum mass (5) which are spaced axially with respect to one another and able to move with respect to the support (2), the first pendular mass (5) being positioned axially on a first side of the support (2) and the second pendular mass (5) being positioned axially on a second side of the support (2), and at least one connecting member (6) connecting the first and second pendular masses (5) pairing said masses, and
- at least one rolling member (11) collaborating with a first runway (12) couple with the first pendular mass (5), a second runway (12) couple with the second pendular mass (5), and a third runway (13) couple with the support (2), so as to guide the movement of the pendulum assembly (3) with respect to the support (2),
the support (2) having at least one opening (9) in which the connecting member (6) and the rolling member (11) are positioned, and
**characterized in that** the connecting member bears a buffer (25) able to be interposed between this connecting member (6) and the edge of the opening (9) at the end of the movement of the pendulum assembly (3) from the rest position with respect to the support (2).

2. Device according to Claim 1, the rolling member (11) and the connecting member (6) being radially aligned when the device (1) is at rest.

3. Device according to Claim 1 or 2, the opening (9) having a radially exterior edge (20) a part of which defines the third runway, two lateral edges and a radially interior edge.

4. Device (1) according to Claim 3, the connecting member (6) coming into abutment against one of the lateral edges (23, 24) of the opening at the end of a movement of the pendulum assembly (3) from the rest position with respect to the support (2).

5. Device (1) according to Claim 4, the buffer (25) being able to become interposed between this connecting member (6) and the lateral edge of the opening (23, 24) at the end of the movement of the pendulum assembly (3) from the rest position with respect to the support (2).

6. Device (1) according to Claim 5, the buffer (25) having a toric shape.

7. Device (1) according to any one of the preceding claims, the connecting member (6) being housed in a cavity (7) of the first pendular mass (5) which is distinct from a cavity (15) of this first pendular mass (5) that collaborates with the rolling member (11) and a part of the edge of which defines the first runway (12), and the connecting member being housed in a cavity (7) of the second pendular mass (5) which is distinct from a cavity (15) of this second pendular mass (5) that collaborates with the rolling member (11) and a part of the edge of which defines the second runway (12).

8. Device (1) according to any one of the preceding claims, the rolling member (11) comprising axially in succession:
- a portion (30) collaborating with the first runway (12),
- a portion (32) collaborating with the third runway (13), and
- a portion (31) collaborating with the second runway (12).

9. Device (1) according to any one of the preceding claims, the rolling member (11) comprising at least one projecting portion providing axial retention of this rolling member (11).

10. Device (1) according to any one of the preceding claims, each pendulum assembly (3) comprising at least two connecting members (6) and at least two rolling members (11), and the support comprising at least two openings (9), each opening (9) housing one of the connecting members (6) and one of the rolling members (11).
